# EUROPEAN PATENT APPLICATION

(11) **EP 1 486 719 A1**
(43) Date of publication of application: **15.12.2004**
(21) Application number: 03028845.0
(22) Date of filing: 16.12.2003
(51) Int. Cl.: F16M 13/02, F16M 11/10

(54) **Wall support for a thin TV set, screen and monitor**

(30) Priority: 13.06.2003 IT MI20031206
(71) Applicant: Benzi, Mario, 22074 LOMAZZO (CO) (IT)
(72) Inventor: Benzi, Mario, 22074 LOMAZZO (CO) (IT)
(74) Representative: Ferraiolo, Ruggero

(57) **Abstract**

A plate (71) fixed to a wall and means for fixing the screen to said fixed plate are spaced one from the other in order to let space for a first horizontal arm (72) and a second horizontal arm (73) spaced one over the other, the first arm (72) being articulated by an end to said fixed plate (71) and with the opposite free end to the screen (75) and the second arm being articulated with said ends to said first fixed plate (71) and said screen (75) in opposite way with respect to the first arm, in order to orient horizontally the screen (Fig. 8).

## Description

The present invention refers to a wall support for a thin TV set, screen and monitor. For language simplicity, in the following description said TV set, screen and monitor are referred to only as screen/s.

TV and computer sets are known which have thin screens, for instance liquid cristals or plasma screen. Said screens are made rest on a desired plane by means of a base allowing to orient the set both in the horizontal and vertical directions.

Said screens may also be fixed on a wall and in this case a support on purpose is required. A support is known comprising a first plate applicable to a vertical wall and a second plate articulated with the first plate capable of rotating in order to orient the screen only in the vertical direction, i.e, towards bottom or vice-versa. The rotation amplitude is controlled by two arms, each of them being fixed to both plates in order to prevent the rotation of said second plate over the desired amplitude.

The main disadvantage of the known support is that it does not allow orientation in the horizontal direction, i.e. towards right and left. Other disadvariteges are that the known support is complicated as to the construction and consequently it is costly, which implyies that it is sold to the consumers as a separate accessory.

In the following description it is presumend that the support is fixed to a vertical wall.

The invented support obviates said disadvantes; it comprises a first plate capable of being fixed to a wall (which plate will be referred to also as fixed plate in the following) and fixing means for a screen, mobile with respect to said first plate and connected with the latter and, as characterized in the claims, said first plate and said fixing means are spaced one from the other in order to let space for two horizontal arms placed spaced one over the other, the first arm being articulated by an end to said first plate and with the opposite free end to the fixing means for the screen and the second arm being articulated with an end to said first plate and with the second free end to the fixing means for the screen, in opposite way with respect to the first arm, said arms being adapted to rotate and orient the screen horizontally, alternatively, about one or the other of two vertical rotation axis each passing by the articulation of the end of an arm on the first plate.

Said fixing means may be arranged alternatively :
- on a second plate articulated with the free ends of both said arms;
- on a third plate, over the second plate, which third plate may rotate under control towards bottom about a horizonal rotation axis adjacent to the lower edge of second plate to incline the screen;
- on a flat element to said second plate;
- on said arm free ends so as to allow screen rotations about a horizontal rotation axis; the fixing means being then blockable in the desired position.
   Said fixing means fit connection means provided on the rear wall of the screen.
   Rotations in the horizontal plane are those permitting to orient the screen to right and left with respect to its position parallel with the wall, to which wall the support is fixed, and in the following they will be referred to as horizontal rotations. Rotations in the vertical plane are those permitting to orient the third plate and the screen associated with the latter towards bottom and in the following they will be referred to as vertical rotations.
   The main advantage of the invented support is that the screen may be oriented both horizontally, towards right and left, and vertically, towards bottom, the screen being caused always to be positioned in front of the viewer.
   Other advantages of the invented support are that, thanks to the reduced thickness of the screen, the latter remains very close to the wall and that the simple construction reduces the cost sensibly so allowing to supply, if requested, said support together with the screen and not separately, as an acessory.
   The invented support will be described in more detail herebelow with reference to the drawings that represent only examples of embodiments and wherein the
- Figures 1 and 3 to 8 are perspective views and
- Fig. 2 is an exploded view.

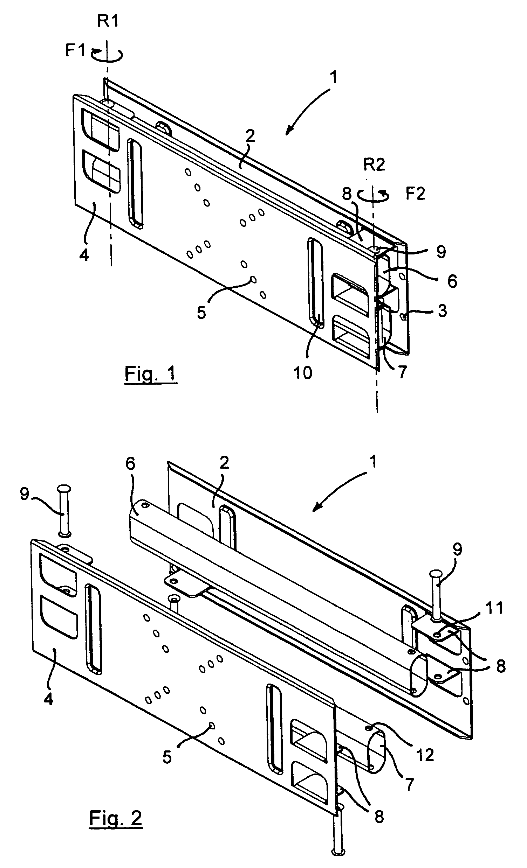

Fig. 1 shows a support for a thin screen 1 in closed position which support comprises a fixed plate 2, fixable to a vertical wall through holes 3, a mobile plate 4 bearing holes 5 for fixing the screen (not visible in the figure), a first arm 6 and a second arm 7 contained between said two plates. First arm 6 is articulated with its right end to plate 2 and with its free left end to the mobile plate 4, on the contrary, the second arm 7 is articulated with its right end to the mobile plate 4 and with its free left end to the fixed plate 2. Said articulations allow the mobile plate 4 to rotate alternatively towards left, about the rotation axis R1, according to arrow R1, and towards right, about the rotation axis R2, according to arrow R2 in order to orient horizontally the screen not shown in the figure.

Fig. 1 also shows articulation means 8, 9 and ribbings 10 for reinforcing the plates 2 and 4.

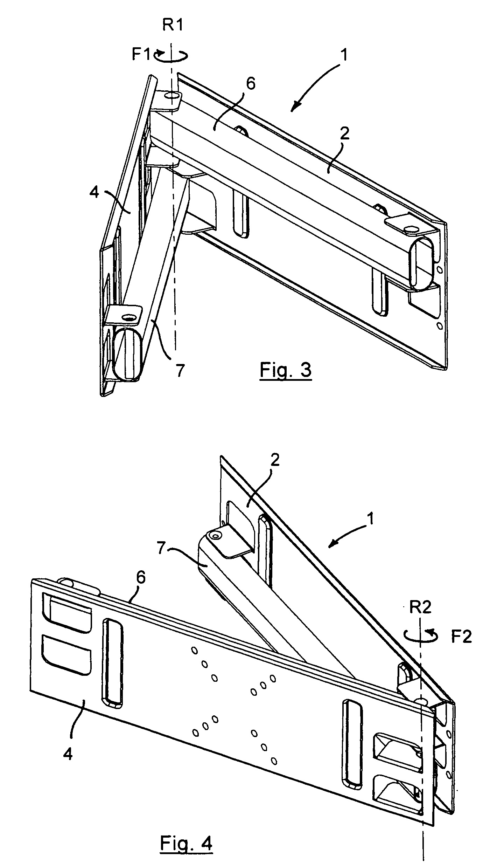

The articulation of the arms with the plates and, then, the working of the support will be explained in more detail with reference to Figures 2, 3 and 4.

Fig. 2 shows the same support illustrated in Fig. 1 and, in detail, how the arms 6, 7 are articulated on the plates 2 and 4. Two hole bearing tabs 8 in each articulation are directly made by cuts in the plate surfaces and bent parpendicularly with respect to same plates.

Each tab couple is adapted to contain an arm end conveniently punctured in order to be articulated thereto by means of a pin 9 introduced into the holes 11 and 12 in the tabs 8 and in the arms and here blocked by rivetting. From the figure it is evident that the right end of first arm 6 is articulated to the fixed plate 2 and the opposite free end is articulated to the mobile plate 4, whereas, on the contrary, the left end of second arm 7 is articulated to fixed plate 2 and the opposite free end is articulated to the mobile plate 4 which bears holes 5.

Some parts described in the previous figures are not provided with reference numbers and are described in the following figures.

Figures 3 and 4 show the support 1 with the mobile plate 4 rotated with respect to the fixed plate 2, respectively, toward left about the rotation axis R1 according to arrow F1 and towards right about the rotation axis R2 according to arrow R2. From the figures it is realized that to move the mobile plate 4 from the position of Fig. 3 to the position of Fig. 4 it is necessary to reposition the mobile plate 4 parallel with fixed plate 2 by roating it about axis R1 in the direction contrary to that indicated by arrow R1 and, from said position, rotate the mobile plate 4 about the rotation axis R2 according to arrow R2. The figures show that the mobile plate 4 is rotated alternatively by the first arm 6 and the second arm 7.

It will be realized that the screen (not shown in the figures) supported by the mobile plate 4 will be oriented according to such rotations and remain very close to the wall.

The articulation described in the figures prevets the mobile plate 4 from spacing from the fixed plate 2 when said mobile plate is parallel with said fixes plate, whereas the two different rotation axis R1, R2 allow the mobile plate 4 to be rotated alternatively in such a way that one of its two vertical adges is adjacent to the wall.

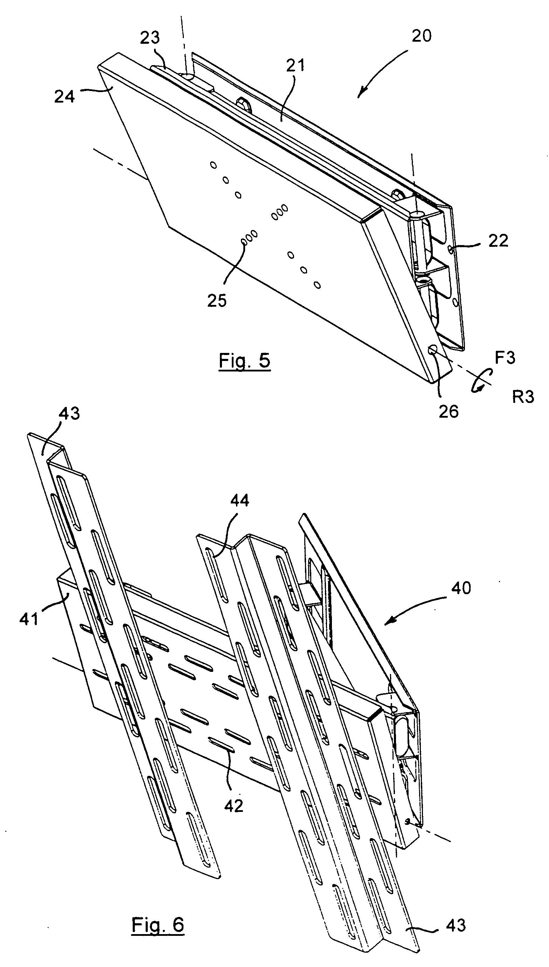

Fig. 5 shows a support for thin screen 20 comprising a fixed plate 21 with holes 22, a first mobile plate 23 and a second mobile plate 24 bearing holes 25 for fixing the screen. Plates 21 and 23 are articulated as the plates 2 and 3 of previous figures.

Mobile plate 23 bears, adjacent to the lower edge, two punctured side vertical tabs (not visible in the figure). Plate 24 bears, in correspondence with the holes in said tabs, holes 26 for articulating with the mobile plate 23, by screws not visible in the figure which are introduced in said holes and engaging respective threaded inserts fixed to said tabs (also not visible in the figure) in order the mobile plate 24 rotate towards bottom about horizontal axis R3 in the direction of arrow R3.

Rotation of mobile plate 24 is limited by the contact of the latter with plate 23 during rotation of plate 24.

Fig. 6 shows a support for thin screen 40 completely similar with those shown in figure 5 wherein the second mobile plate 41 bears on its surface a plurality of horizontal apertures 42 to which two vertical bars 43 are fixed by means of bolts not shown in the figure, said bars bearing a plurality of apertures 44 for fixing a screen. The combination of the horizontal apertures with those vertical makes it possible to fix to the support the majority of the screens put on the market.

In the enbodiments shown in the figures 5 and 6 the support allows the screen to be oriented both to right and left and simoultaneously towards bottom.

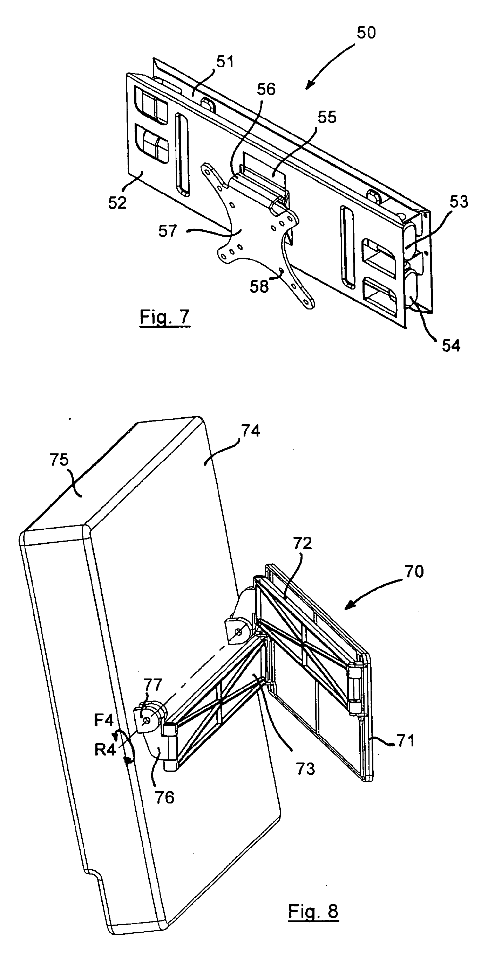

Fig. 7 shows a support for a thin screen 50 in closed position comprising a fixed plate 51, a mobile plate 52 that are reciprocally articulated as plates 2, 4, 21 and 23 of previous figures by means of a first arm 53 and a second arm 54. Mobile plate 52 bears an aperture 55 on its own surface for receiving a bent extension 56 (partly visible in the figure) of a flat element 57. Said flat element 57 is associated with plate 52 so as to control its vertical slope by means of its own bent extension 56 engaging a corresponding curving in the surface 52 where, afterwards, said flat element is fixed by means of a screw and through holes present in said extension and in the surface of said plate 52, curving, holes and screws which are not visible in the figure. Flat element 57 is of the attack type "VESA" which is a normalized fixing means used by the most important screen producers to realize the fixing means of the screens to the supports. Intact, said flat element 57 bears a plurality of holes 58 positioned so as to be in correspondence with the holes provided in many screens on the market.

Fig. 8 shows a support for a thin screen 70 comprising a fixed plate 71, a first arm 72 and a second arm 73. First arm 72 is articulated with its right end to fixed plate 71 and with its opposite free end to the rear panel 74 of the screen 75, on the contrary second arm 73 is articulated with its left end to fixed plate 71 and with its opposite free end to the rear panel 74 of screen 75. Each free end of said first and second arm bears a punctured vertical bracket 76 which engages between two punctured vertical tabs 77 in the rear panel 74 of screen 75 and in said holes a bolt not visible in the figure passes that serves **to** fix the screen in the desired position. From the figure it is evident how the screen may be rotated, towards bottom or top, about horizontal axis R4 in the directions as indicated by the arrow F4.

It will be realized that the manual rotations as described in the figures may be caused mechanically by means of a suitable device controlled by a remote control.

## Claims

1. Wall support (1, 20, 40, 50, 70) for a thin TV set, screen and monitor comprising a first plate (2, 21, 51,71) adapted to be fixed to a wall and fixing means (5, 25, 42/44, 58, 76) for said TV set, screen and monitor which means are mobile with respect to said first plate and connected to the latter, **characterized in that** said first plate (2, 21, 51,71) and said fixing mans (5, 25, 42/44, 58, 76) are spaced one from another in order to let space for a first horizontal arm (6, 53, 72) and a second horizontal arm (7, 54, 73) placed spaced one over the other, the first arm being articulated by an end to said first plate and with the opposite free end to said TV set, screen and monitor and the second arm being articulated with an end to said first plate and with the opposite free end to said TV set, screen and monitor, in opposite way with respect to the first arm, said arms being adapted to rotate and orient said TV set, screen and monitor horizontally, alternatively, about one or the other of two vertical rotation axis each passing by the articulation of the end of an arm on the first plate.

2. Wall support (1) according to claim 1 **characterized in that** said fixing means (5) are in a second plate (4) articulated on the free end of said arms.

3. Wall support (20, 40) according to claims 1 and 2 **characterized in that** said fixing means (25, 42, 44) are on a third plate (24, 41) articulated adjacent to the lower arm of said second plate (23) in order to rotate under control about a horizontal rotation axis.

4. Wall support (50) according to claims 1 and 2 **characterized in that** said fixing means (58) are made on a flat element (57) rotatable and fixable to said second plate (52) whereto they may be blocked.

5. Wall support (70) according to claim 1 **characterized in that** said fixing means (76) are provided each on a free end of said arms (72, 73) in order to rotate said TV set, screen and monitor about a horizonatal rotation axis and to block them in the desired position.
